# EUROPEAN PATENT APPLICATION

(11) **EP 2 586 751 A1**
(43) Date of publication of application: **01.05.2013**
(21) Application number: 11798273.6
(22) Date of filing: 24.06.2011
(51) Int. Cl.: C03B 33/09, B23K 26/00, B23K 26/38, B23K 26/40, B28D 5/00

(54) **CUTTING METHOD AND CUTTING APPARATUS**

(30) Priority: 25.06.2010 JP 2010145148
(71) Applicant: Asahi Glass Company, Limited, Tokyo 100-8405 (JP)
(72) Inventor: MATSUMOTO, Akinori, Tokyo 100-8405 (JP); FUKASAWA, Yasuji, Tokyo 100-8405 (JP); SATO, Yosuke, Tokyo 100-8405 (JP)
(74) Representative: Müller-Boré & Partner Patentanwälte
(86) International application number: PCT/JP2011/064586
(87) International publication number: WO 2011/162392

(57) **Abstract**

Provide a breaking process and so on, which are capable of breaking a work piece with good accuracy by a simple structure.

In a process for breaking a work piece 10 by relatively moving an irradiation region 101 of laser light 100 along at least a part of a scribe line 12 formed on a front surface 11 of the work piece 10 so as to develop a crack in a position of the scribe line anterior to the irradiation region, the irradiation strength of the laser light is changed in a wave-like manner with the lapse of time.

## Description

### TECHNICAL FIELD

The present invention relates to a breaking process and a breaking system.

### BACKGROUND ART

As a representative process for breaking a work piece (brittle-material sheet, such as a glass sheet) has been known a process for breaking a work piece along a scribe line by forming the scribe line on a front surface of the work piece, followed by applying bending stress to the work piece. In this process, since break sections grind against each other, e.g. at the time of application of bending stress, it is likely that cullet (glass chips) is produced in a large amount and that the quality of the break sections deteriorates. Further, in this process, it is difficult to apply bending stress when a scribe line is formed in some shape.

In order to solve these problems, Japanese Patent No. 3027768 proposes a breaking process for breaking a work piece by thermal stress by moving an irradiation region of laser light along a scribe line formed on a front surface of the work piece and moving a cooling source so as to follow the irradiation region. In this breaking process, compressive stress is applied by thermal expansion since the laser light is partly absorbed as heat in the work piece in the irradiation region of the laser light so as to place the irradiated portion of the work piece at a higher temperature than a portion of the work piece around the irradiated portion. On the other hand, tensile stress is applied in direction orthogonal to the scribe line in a portion of the work piece behind the irradiated portion of the work piece, and a crack is formed in that portion since a cooling gas is blown to that portion from the cooling source so as to place that portion at a lower temperature than a portion of the work piece surrounding that portion. The leading edge of the crack moves, following the irradiation region of the laser light.

### PRIOR ART REFERENCE

### PATENT DOCUMENT

PATENT DOCUMENT 1: Japanese Patent No. 3027768

### DISCLOSURE OF INVENTION

### TECHNICAL PROBLEM

However, the conventional breaking system is complicated because of requiring a cooling source, a moving device for moving the cooling source, a controller for controlling the moving device, and so on. Further, in the conventional breaking process, thermal stress is produced in a wide range since there is a time lag between heating and cooling. This leads to disruption of thermal stress balance in an in-planar direction and a thickness direction of a work piece, with the result that breaking accuracy decreases.

The present invention has been made in view of the above-mentioned problems. It is an object of the present invention to provide a breaking process and a breaking system, which are capable of breaking a work piece with good accuracy by a simple structure.

### SOLUTION TO PROBLEM

In order to attain the above-mentioned object, the breaking process according to the present invention is a process for breaking a work piece made of a brittle-material by irradiating the work piece with laser light, which is characterized in that the process includes:
relatively moving an irradiation region of the laser light along at least a part of a scribe line with respect to the work piece, the scribe line being preliminarily formed on a front surface of the work piece;
developing a crack in a position anterior to the irradiation region; and
changing the irradiation strength of the laser light in a wave-like manner with time.

In order to attain the above-mentioned object, the breaking system according to the present invention is a system for breaking a work piece made of a brittle-material by irradiating the work piece with laser light, which is characterized in that the system includes:
a stage for supporting the work piece, a light source for emitting the laser light, and a controller for moving an irradiation region of the laser light on a front surface of the work piece;
wherein the controller relatively move the irradiation region of the laser light along at least a part of a scribe line with respect to the work piece, the scribe line being preliminarily formed on the front surface, such that a crack develops in a position of the scribe line anterior to the irradiation region; and
the controller changes the irradiation strength of the laser light in a wave-like manner with time.

### ADVANTAGEOUS EFFECT OF INVENTION

In accordance with the present invention, it is possible to provide a breaking process and a breaking system, which are capable of breaking a work piece with good accuracy by a simple structure without disposing a cooling source behind an irradiation region of laser light.

### BRIEF DESCRIPTION OF DRAWINGS

Fig. 1 is a side view of the breaking system according to a first embodiment of the present invention;
Fig. 2 is a schematic view showing a relationship between laser light 100 and an irradiation region 101;
Fig. 3 is a perspective view of a glass sheet 10 seen from a planar direction;
Fig. 4 is a view of a modification of Fig. 3;
Fig. 5 is an explanatory view (1) showing how to break by use of a breaking system 20;
Fig. 6 is an explanatory view (2) showing how to break by use of the breaking system 20;
Fig. 7 is a waveform diagram of the irradiation strength of the laser light 100:
Fig. 8 is a view of a modification of Fig. 7;
Fig. 9 is a plan view showing a relationship between an irradiation position of the laser light 100 and its irradiation strength; and
Fig. 10 is an explanatory view showing how to evaluate breaking accuracy.

### DESCRIPTION OF EMBODIMENTS

Now, an embodiment of the present invention will be described in reference to the accompanying drawings. It should be noted that the present invention is by no means limited to the embodiment described later, and that various modifications and substitutions may be made to the embodiment described later without departing from the scope of the present invention.

For example, although a glass sheet is used as the work piece in the embodiment described later, a metal sheet such as a silicon substrate or a ceramic sheet, may be used in place of the glass sheet.

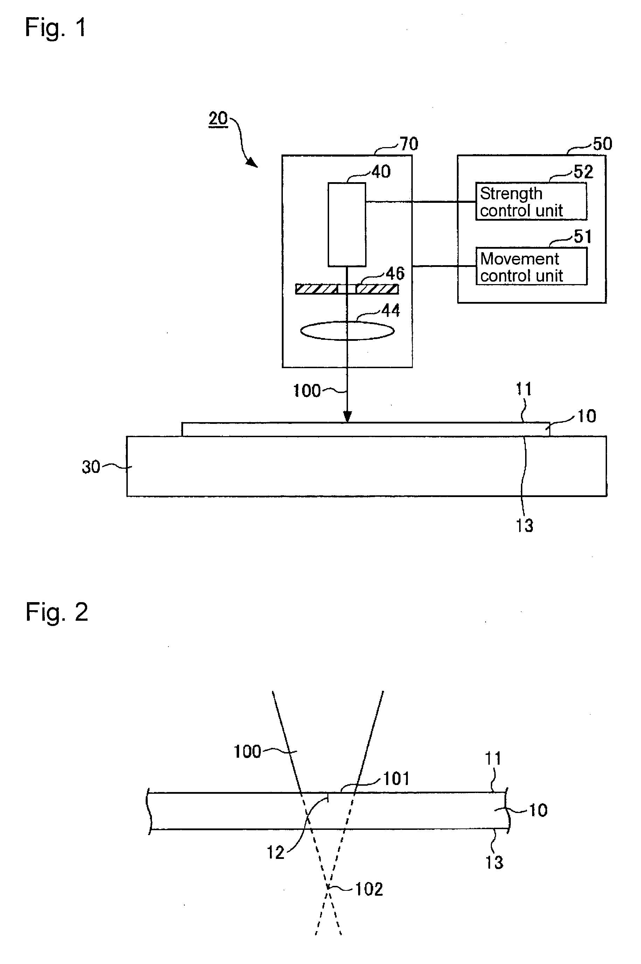

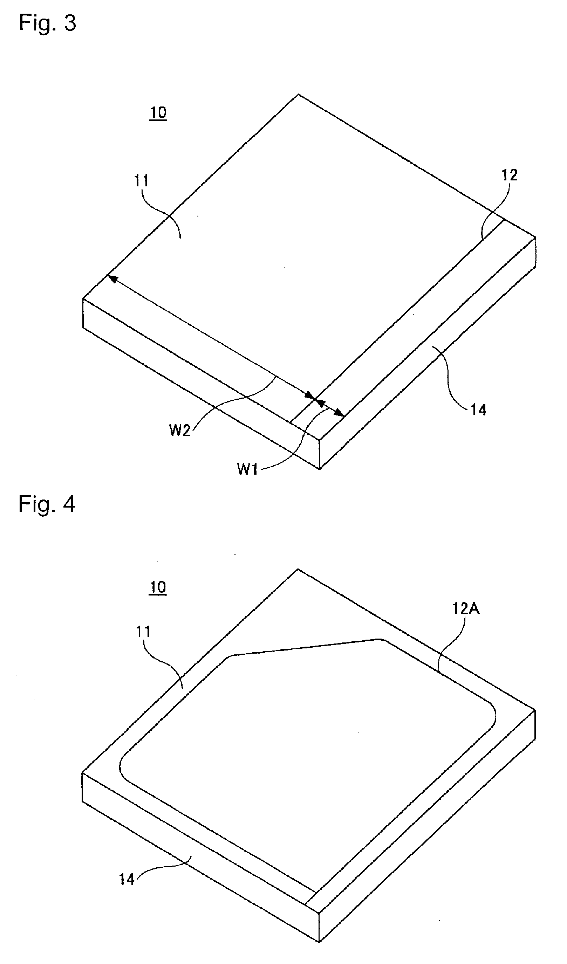

Fig. 1 is a side view of the breaking system according to one embodiment of the present invention. Fig. 2 is a schematic view showing a relationship between laser light 100 and an irradiation region 101. Fig. 3 is a perspective view of a glass sheet 10 seen from a planar direction, which shows a shape of a scribe line 12.

The breaking system 20 includes a stage 30 for supporting the glass sheet 10, a light source 40 for emitting the laser light 100, a controller 50 for controlling the irradiation region 101 and the irradiation strength of the laser light 100 on a front surface 11 of the glass sheet 10 as shown in Figs. 1 and 2.

This breaking system 20 can break, i.e. cut the glass sheet 10 by thermal stress by relatively moving the irradiation region 101 of the laser light 100 with respect to the glass sheet 10 along at least a part of the scribe line 12 preliminarily formed on the front surface 11 of the glass sheet 10, which will be described in detail later.

No particular limitation is imposed on the application of products obtained by breaking the glass sheet 10. Examples of the products include a window glass for a building, a window glass for a vehicle, a glass substrate for a liquid crystal display (LCD) and a glass substrate for a plasma display (PDP).

The glass used for preparation of the glass sheet 10 may be properly determined according to the application of products. For example, soda-lime glass is used for a window glass for a building, a window glass for a vehicle and a PDP glass substrate, and alkali-free glass is used for a LCD glass substrate.

The glass sheet 10 has the scribe line 12 preliminarily formed on the front surface 11 as shown in Fig. 3. The scribe line 12 may be linear and have its beginning and ending at an edge 14 of the glass sheet or at a position of the glass sheet near the edge as shown in, e.g. Fig. 3.

Although the scribe line 12 is linear in this embodiment, no particular limitation is imposed on the shape of the scribe line. For example, the scribe line may be a scribe line 12A formed in a curved shape as shown in Fig. 4 and may have its ending crossing the scribe line 12A at a point thereof.

The method for forming the scribe line 12 may be a generally known method, such as a method by use of a cutter or a method by use of laser light. When a cutter is used, the scribe line 12 is formed by moving the leading edge of the cutter with the leading edge of the cutter being pressed against the front surface 11 of the glass sheet 10. In this case, cutting oil may be applied to the glass surface in order to avoid the occurrence of chipping due to friction or protect the scribe line. On the other hand, when laser light is used, the scribe line is formed by thermal stress by irradiating the front surface 11 of the glass sheet 10 with the laser light and relatively moving the irradiation region of the laser light along a planned breaking line with respect to the glass sheet 10.

The stage 30 supports a rear surface 13 of the glass sheet 10. The stage 30 may support the entire rear surface 13 of the glass sheet 10 or partly support the rear surface 13. The glass sheet 10 may be fixed to the stage by suction or fixed to the stage by an adhesive.

The light source 40 is a light source for emitting laser light under control of the controller 50. The light source 40 may be a CW laser (continuous wave laser) which emits the laser light 100 with continuous oscillation or a pulse laser for emitting the laser light 100 with intermittent oscillation. No limitation is imposed on the way of oscillation.

No particular limitation is imposed on the CW laser. A high output and high efficiency semiconductor laser may be used for example. For example, an Al-free and long-life InGaAsP-based semiconductor laser (wavelength: 808 nm, 940 nm) is preferably used.

In a light path between the light source 40 and the stage 30 is disposed a condensing lens 44 for condensing the laser light 100 emitted from the light source 40. The laser light 100 emitted from the light source 40 enters the front surface 11 of the glass sheet 10 through the condensing lens 44.

Further, between the light source 40 and the stage 30 may be disposed a mask 46 which defines the shape of the irradiation region 101 of the laser light 100 (hereinbelow, simply referred to as "the irradiation shape of the laser light 100"). The mask 46 is formed from a thin sheet having an opening. No particular limitation is imposed on the shape of the opening (eventually the irradiation shape of the laser light 100). The shape of the opening may be circular, elliptical or rectangular for example.

The light source 40, the condensing lens 44 and the mask 46 are incorporated into a single processing head 70. The processing head 70 is standby above the stage in an inactive state and is moved in an in-plane direction or an upward or downward direction of the stage 30 under control of the controller 50 in an active state. Thus, it is possible to move the irradiation region 101 and a focus position 102 of the laser light 100.

Although the processing head 70 is configured so as to be movable in order to make the irradiation region 101 of the laser light 100 relatively movable with respect to the glass sheet 10 in this embodiment, the stage 30 may be configured so as to be movable, or both of the processing head and the stage may be configured so as to be movable.

The controller 50 is constituted by a microcomputer and so on. The controller 50 includes a movement control unit 51 for moving the irradiation region 101 of the laser light 100 and an irradiation strength control unit 52 for controlling the irradiation strength of the laser light 100.

The movement control unit 51 controls the position etc. of the processing head 70 to move the irradiation region 101 of the laser light 100. The irradiation strength control unit 52 modifies the output etc. of the light source 40 to control the irradiation region of the laser light 100. The controller 50 controls various kinds of movements of the breaking system 20, which will be described below.

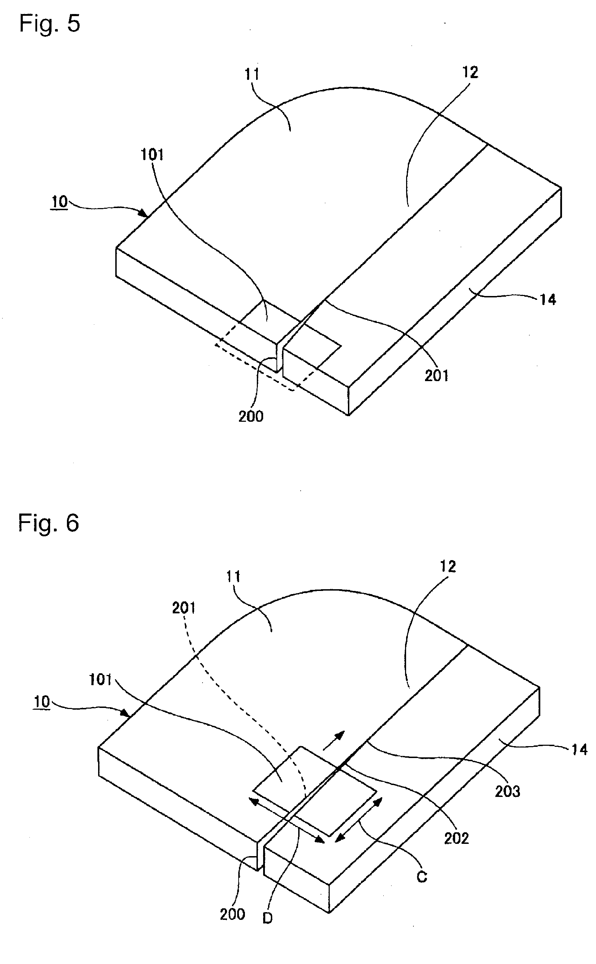

Now, the breaking process by use of the breaking system 20 having the above-mentioned structure will be described in reference to Figs. 5 and 6. Figs. 5 and 6 are explanatory views showing a breaking process by use of the breaking system shown in Fig. 1.

When breaking the glass sheet 10, the laser light 100 is first applied to the beginning of the scribe line 12 or a position of the scribe line close to the beginning for a certain period of time (such as 0.1 sec) as shown in Fig. 5. Thus, a portion of the glass sheet in the irradiation region 101 of the laser light 100 is subjected to compression stress by thermal expansion because of being placed at a higher temperature than a portion of the glass sheet around the irradiated portion. As the counter action of the generation of the compression stress, a portion of the glass sheet ahead of the irradiation region 101 of the laser light 100 is subjected to tensile stress in a direction orthogonal to the scribe line 12. As a result, an initial crack 200 is formed along the scribe line 12 from one edge 14 of the glass sheet 10 where breaking starts to the portion of the glass sheet ahead of the irradiation region 101 of the laser light 100. The initial crack 200 passes through the glass sheet 100 in a thickness direction of the glass sheet at least at the edge 14 of the glass sheet 10 and a portion of the glass sheet close to the edge.

Then, the irradiation region 101 of the laser light is relatively moved along the scribe line 12 with respect to the glass sheet 10 to develop a crack 202 in a position of the scribe line 12 anterior to the irradiation region 101 as shown in Fig. 6. The crack 202 is formed so as to develop and extend from a leading end 201 of the initial crack 200, and the crack 202 has a leading end 203 locating at a portion of the glass sheet ahead of the irradiation region 101.

After that, when the irradiation region 101 of the laser light 100 is brought close to the ending of the scribe line 12, the crack 202 reaches an edge 14 as the opposed end of the glass sheet 10 and break the glass sheet 10, finishing the breaking operation of the glass sheet 10.

In this embodiment, it is possible to simplify the breaking system since it is not necessary to dispose a cooling source, a moving device for moving the cooling source, a controller for controlling the moving device, and other devices used in the conventional generally known breaking method as described above. In this embodiment, it is also possible to prevent thermal stress from being produced in a wide range since the crack 202 is developed in a position of the scribe line 12 anterior to the irradiation region 101 to break the glass sheet 10 by relatively moving the irradiation region 101 along at least a part of the scribe line 12 with respect to the glass sheet 10. Thus, it is possible to have good breaking accuracy.

Although the initial crack 200 is formed by irradiating the beginning of the scribe line 12 or a portion of the scribe line close to the beginning with the laser light 100 for a certain period of time in this embodiment, the present invention is not limited to such a mode. By optimizing the irradiation shape and the irradiation strength of the laser light 100, it is possible to form the initial crack 200 and the crack 202 without stopping the movement of the laser light 100.

Now, preferred conditions for the laser light 100 will be described.

The wavelength of the laser light 100 may be properly determined, depending on the physical property or the shape of the glass sheet 10. For example, when the glass used for the glass sheet 10 is sola-lime glass, the laser light 100 is preferred to have a wavelength or wavelengths in a range of 795 to 1,030 nm. When the wavelength is longer than 1,030 nm, it is difficult to fabricate a semiconductor laser having a high output (such as at least 100 W).

Further, when the wavelength of the laser light 100 is too long, a large part of the laser light 100 is absorbed as heat in a portion of the glass sheet 10 close to the surface 11. Thus, the front surface 11 of the glass sheet 10 is overheated since glass has a low thermal conductivity in general, and the inside of the glass sheet 10 does not acquire a sufficiently high temperature. Accordingly, the glass sheet 10 fails to have sufficient tensile stress produced therein, decreasing breaking accuracy.

Furthermore, when the front surface 11 of the glass sheet is overheated, cutting oil which has been used for forming the scribe line 12 is burnt. Since carbide produced after burning absorbs a large part of the laser light 100, the front surface 11 of the glass sheet 10 is further overheated.

Furthermore, when the front surface 11 of the glass sheet 10 is overheated, a large amount of cullet (glass chips) is produced, the breaking accuracy is decreased since another crack develops in, e.g. a direction orthogonal to the scribe line 12, starting at a lateral crack produced when forming the scribe line 12.

On the other hand, the wavelength of the laser light 100 is too short, it is difficult to obtain sufficient thermal stress required for breaking since a large part of the laser light 100 passes through the glass sheet 10.

The focus position 102 of the laser light 100 is preferred to be shifted toward the opposite side of the light source 40 as shown in Fig. 2 or toward the light source 40 with respect to the front surface 11 of the glass sheet 10. In other words, the focus of the laser light condensed by the condensing lens is preferred to lie above the glass sheet 10 (a position closer to the light source 40) or under the glass sheet 10 (the opposite side of the light source 40). Thus, it is possible to prevent the front surface 11 of the glass sheet 10 from being overheated.

By the way, the crack 202 is developed in a position of the scribe line 12 anterior to the irradiation region 101. For example, when the movement of the laser light 100 is stopped, the leading edge 203 of the crack 202 moves forward as the irradiation period of time of the laser light 100 increases.

In order to cope with this problem, the irradiation strength of the laser light 100 is changed in a wave-like manner with time in this embodiment. Thus, the distance between the irradiation region 101 of the laser light 100 and the leading edge 203 of the crack 202 can be reduced to control a thermal stress distribution at the leading edge 203 of the crack 202 with good accuracy. Accordingly, it is possible to obtain good breaking accuracy.

The effect obtained by the irradiation strength of the laser light 100 in a wave-like manner with time becomes particularly significant when the scribe line 12 is formed in the vicinity of an edge 14 of the glass sheet 10. This is because thermal stress balance is subjected to disruption since the glass sheet has different heat capacities on both sides of the scribe line 12. From this point of view, the present invention is particularly appropriate in a case where a narrower width W1 of widths W1 and W2 of portions of a glass sheet on both sides of a scribe line 12 (the width of a discarded portion, i.e. the width of a portion of a glass sheet close to an edge, which is discarded as an unnecessary portion after the glass sheet has been broken, see Fig. 3) is at most four times the thickness of the glass sheet, e.g. a case where a narrow width is at most 20 mm when the glass sheet has a thickness of 5 mm. The use efficiency of the glass sheet 10 increases as the width W1 of such a discarded portion decreases.

By the way, the crack 202 tends to linearly develop in a stepwise manner. The reason is that when thermal stress reaches a certain level of value, the crack 202 develops, and when the crack 202 has developed, thermal stress is released.

Since it is possible to change the irradiation strength of the laser light 100 in a wave-like manner with time so as to gradually proceed with the development of the crack 202 with the developing direction of the crack being controlled, it is possible to obtain high breaking accuracy even when the scribe line 12 contains a curved portion.

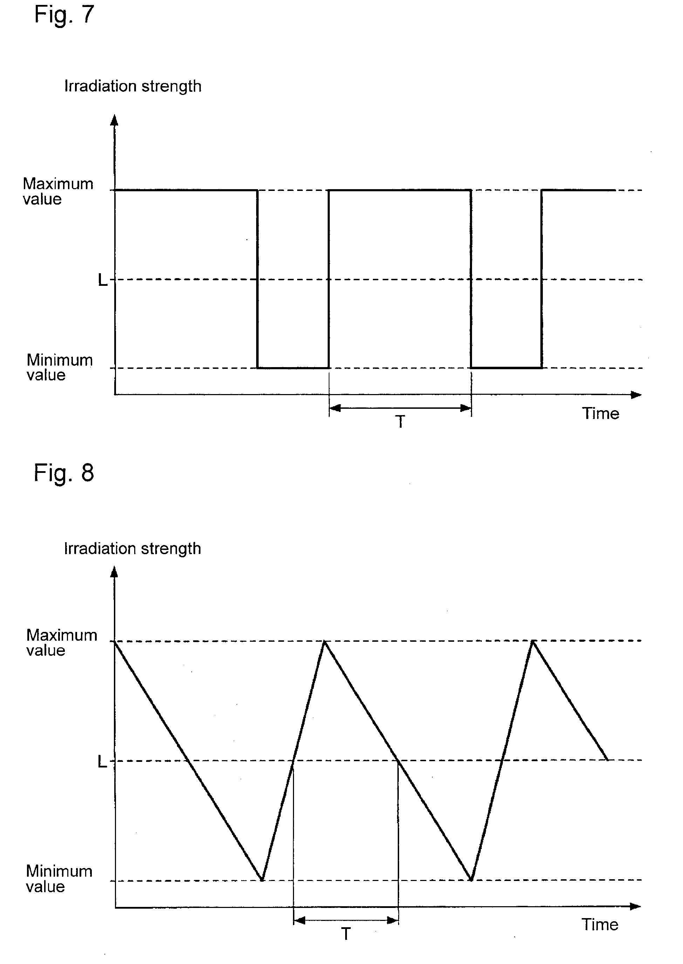

The irradiation strength of the laser light 100 is cyclically changed between a maximum value and a minimum value as shown in, e.g. Figs. 7 and 8. Various kinds of patterns may be properly selected as the waveform of the irradiation strength of the laser light, and no particular limitation is imposed on the waveform. Examples of the waveform include a pulse waveform shown in Fig. 7, a triangular waveform shown in Fig. 8, or sinusoidal waveform.

Although the irradiation strength of the laser light 100 is cyclically changed between the maximum value and the minimum value in this embodiment, no limitation is imposed on the form and pattern in the change of the irradiation strength. For example, the change cycle, the maximum value and the minimum value, and the duty ratio of the irradiation strength may be variable.

The maximum value or the minimum value of the irradiation strength may be set, depending on the physical property or the shape of the glass sheet 10, the size and the shape of a scribe line 12, the irradiation position, the irradiation area or the moving speed of the laser light 100 and so on. The minimum value is set so as to prevent the crack 202 from substantially developing and may be 0 (unit: W).

On the other hand, the maximum value is set so as to substantially develop the crack 202. The maximum value is set such that the glass temperature in the irradiation region 101 of the laser light 100 is lower than the annealing point of the glass (such as, a temperature of at most about 550°C for a soda-lime glass sheet). When the glass temperature is not lower than the annealing point, it is difficult to break the glass sheet 10 since the glass is subjected to viscous flowing so as to relieve thermal stress.

The method for cyclically changing the irradiation strength of the laser light 100 in a wave-like manner may be a method for using a CW laser in addition to a method for using a pulse laser as the light source 40 of the laser light 100. When a CW laser is used, the output of the CW laser is changed in a wave-like manner with time.

While the irradiation strength of the laser light 100 is changed in a wave-like manner with the time, the irradiation region 101 of the laser light 100 may be continuously moved or intermittently moved. When the irradiation region is intermittently moved, the output of the light source 40 of the laser light 100 may be increased after temporarily halt of movement, and the output may be decreased before the movement restarts.

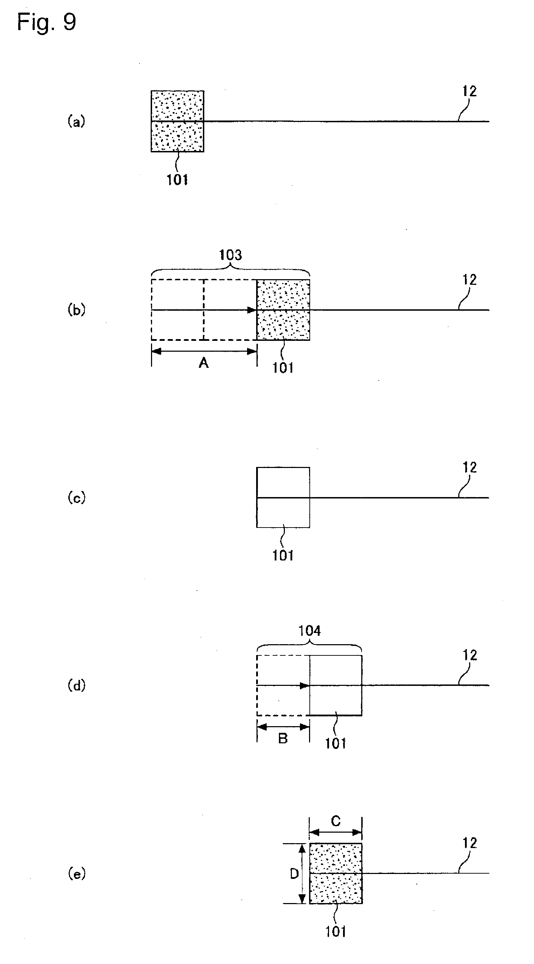

Fig. 9 is a plan view showing a relationship between the irradiation position of the laser light and its irradiation strength. In Fig. 9, the irradiation strength of the laser light 100 is changed in a pulse waveform so as to have either one of the maximum value and the minimum value while the irradiation region 101 of the laser light 100 is continuously moved.

First, the irradiation strength of the laser light 100 is instantly increased from the minimum value to the maximum value in Fig. 9(a). Then, the irradiation region 101 of the laser light 100 is moved with the irradiation strength of the laser light 100 is kept at the maximum value in Fig. 9. This moving distance (hereinbelow, referred to as "the moving distance in intense irradiation") is defined as A (mm). Then, the irradiation strength of the laser light 100 is instantly reduced from the maximum value to the minimum value in Fig. 9(c). After that, the irradiation region 101 of the laser light 100 is moved with the irradiation strength of the laser light 100 being kept at the minimum value in Fig. 9(d). This moving distance (hereinbelow, referred to as "the moving distance in weak irradiation") is defined as B (mm). It should be noted that each of the above-mentioned moving distances of the irradiation region means the moving distance between the center of the irradiation region before movement and the center of the irradiation region after movement, the moving distance between a front end of the irradiation region before movement and the front end of the irradiation region after movement, the moving distance between a rear end of the irradiation region before movement and the rear end of the irradiation region after movement, or the moving distance between a preset position of the irradiation region before movement and the preset position of the irradiation region after movement.

After that, the irradiation strength of the laser light 100 is instantly increased from the minimum value to the maximum value in Fig. 9(e) as in Fig. 9(a). In this manner, the operations shown in Fig. 9(a) to Fig. 9(d) are cyclically repeated. As shown in Fig. 9(e), with regard to the irradiation region 101 of the laser light 100, it is assumed that the irradiation region 101 has a moving-direction length of C (mm) and the irradiation region 101 has a width-direction length of D (mm). When the irradiation region is formed in an elliptical shape, it is presumed that the irradiation region has a long axis length or short axis length of C (mm) in the moving direction and a length of D (mm) in the width direction, although the irradiation region is shown to be formed in a rectangular shape in the case of Fig. 9. This is also applicable to a case where the irradiation region is formed in a circular shape or an oval shape.

A ratio A/B of the moving distance in intense irradiation A to the moving distance in weak irradiation B is preferably within a range of greater than 0.2 to less than 5. When the ratio A/B is greater than 0.2, it is possible to ensure the moving distance in intense irradiation A at a sufficient level so as to obtain sufficient thermal stress required for breaking the glass sheet 10. On the other hand, when the moving distance in intense irradiation A is at least 5, it is impossible to sufficiently have an advantage obtained by changing the irradiation strength of the laser light 100 in a wave-like manner since the moving distance in intense irradiation A is too long. The ratio (A/B) is more preferably 0.5 to 4 and much more preferably 1 to 3.

In the above-mentioned numerical ranges, it is meant that the wording "to" are used to include the upper and lower limits recited before and after it, unless otherwise specified, and the wording "to" in Description should be regarded as having a similar meaning.

When the irradiation strength of the laser light 100 is changed in a triangular waveform or a sinusoidal waveform, the moving distance in intense irradiation A is set to a distance that the irradiation region 101 moves in one cycle while the irradiation strength is kept at at least a limiting value L required for allowing the crack 200 to develop (see Figs. 7 and 8). On the other hand, the moving distance in weak irradiation B is set to a distance that the irradiation region 101 moves in one cycle while the irradiation strength is kept at less than the limiting value L.

Further, a ratio A/C of the moving distance in intense irradiation A to the moving-direction length C is preferably at least 0.5. When the ratio A/C is less than 0.5, it is impossible to sufficiently have an advantage obtained by changing the irradiation strength of the laser light 100 in a wave-like manner since the moving distance in intense irradiation A is too long such that an intense irradiation range 103 and a weak irradiation range 104 overlap each other in an excessively wide range. Although no special limitation is imposed on the ratio A/C, the ratio may be at most 6 for example. The ratio A/C is more preferably 1 to 4, much more preferably 1 to 2.

Furthermore, a ratio B/C of the moving distance in weak irradiation B to the moving-direction length C is preferably in a range of higher than 0.2 to less than 6. When the ratio B/C is higher than 0.2, it is possible to ensure the moving distance in weak irradiation B at a sufficient level so as to sufficiently have an advantage obtained by changing the irradiation strength of the laser light 100 in a wave-like manner. On the other hand, the ratio B/C is at least 6, it is difficult to obtain a sufficient amount of heat required for breaking the glass sheet 10 since the moving distance in weak irradiation B is too long. When he moving distance in weak irradiation B is too long, the irradiation region 101 passes the leading edge 203 of the crack 202 to make the crack 202 discontinuous, thereby reducing breaking accuracy.

A duration period T (see Figs. 7 and 8) that the irradiation strength of the laser light 100 is kept at at least the limiting value L (see Figs. 7 and 8) is preferably 0.005 to 1 sec. When the duration period T is at least 0.05 sec, it is possible to obtain sufficient thermal stress required for breaking the glass sheet 10. On the other hand, when the duration period T is longer than 1 sec, it is difficult to control a thermal stress distribution at the leading edge of the crack 202 with good accuracy since the leading edge 203 of the crack 202 is too far from the irradiation region 101 of the laser light 100.

A moving distance E (E=A+B) of the irradiation region 101 of the laser light 100 between a position where the irradiation strength of the laser light 100 reaches the maximum value and a position where the irradiation strength next reaches the maximum value is preferably 10 to 80 mm. When the moving distance E is at least 10 mm, it is possible to obtain continuous break and to provide break sections with stable quality. On the other hand, the moving distance E is longer than 80 mm, the irradiation region 101 of the laser light 100 passes the leading edge 203 of the crack 202 to make the crack 202 discontinuous, thereby reducing breaking accuracy.

### EXAMPLES

Now, the present invention will be specifically described based on Examples. It should be noted that the present invention is by no means limited to the Examples.

### (Example 1)

In Example 1 (Working Example), the breaking system shown in Figs. 1 and 2 was used to break a glass sheet 10 with a scribe line 12 formed thereon as shown in Fig. 3 in accordance with the breaking process shown in Fig. 5 to Fig. 7 and Fig. 9. The glass sheet 10 was made of green hue soda-lime glass to be used as a window glass for a vehicle, and the glass sheet 10 was formed in a rectangular shape having 500 mm in length × 500 mm in width × 5 mm in thickness.

The scribe line 12 was formed by rolling a diamond wheel cutter at a moving speed of 100 mm/sec while the diamond wheel cutter had a leading edge (having a leading edge angle of 155°) pressed against a front surface 11 of the glass sheet 10 by a force of 90N. The scribe line 12 was in parallel with a side of the glass sheet 10, and the glass sheet had widths W1 and W2 set to 10 mm and 490 mm, respectively on both sides of the scribe line 12.

A CW laser was used as a light source 40 for laser light 100. Specifically, a semiconductor laser (wavelength of laser light: 808 nm) was used. The intensity strength of the laser light 100 was cyclically changed by cyclically changing the output of the light source 40 such that the output was set to either one of the values of a maximum output (300 W) and a minimum output (1 W).

The laser light 100 had an irradiation region 101 formed in a rectangular shape so as to be symmetrical with respect to the scribe line, and the irradiation region had a moving-direction length C of 5 mm and a width-direction length D (see Fig. 9) of 3 mm. The laser light 100 moved at a speed of 20 mm/sec.

By continuously moving the irradiation region 101 of the laser light 100 while the irradiation strength of the laser light 100 was changed in a pulse waveform in this manner, a crack 202 was developed in a position of the scribe line 12 anterior to the irradiation region 101 to carry out a break test.

### (Example 2 to Example 6)

In each of Example 2 to Example 6, a break test was carried out in the same manner as Example 1 except that the light source 40 was subjected to different output control, and that a moving distance in intense irradiation A and a moving distance in weak irradiation B ware changed.

### (Example 7)

In Example 7 (Comparative Example), a break test was carried out in the same manner as Example 1 except that the irradiation shape and the moving speed of the laser light 100 and the output of the light source 40 were changed, and that a crack 202 was developed from a position of a scribe line 12 behind the irradiation region 101 of the laser light 100. The irradiation shape of the laser light 100 was a circular shape having a diameter of 2 mm, and the laser light 100 moved at a speed of 70 mm/sec. The light source 40 had a constant output of 120 W.

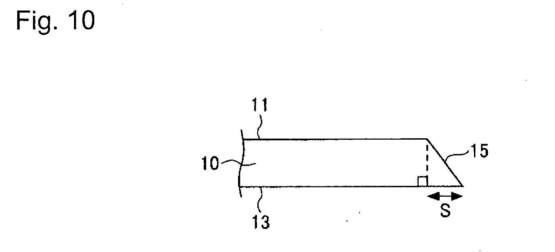

The conditions and the results of these break tests are shown in Table 1. The results were evaluated in terms of the occurrence of break and the quality of break sections. A symbol of ○ represents a case where the breaking operation was successful, and a symbol of × represents a case where the breaking operation was failed. The quality of each break section was evaluated in terms of the inclination S of each break section 15 shown in Fig. 10. A symbol of ⓪ represents a case where the inclination S was at most 0.3 mm, a symbol of ○ represents a case where the inclination S was in a range of higher than 0.3 mm to at least 0.5 mm, a symbol of Δ represents a case where the inclination S was in a range of higher than 0.5 mm to at least 1.0 mm, and a symbol of × represents a case where the inclination S was higher than 1.0 mm.

**[TABLE 1]**

| | Breaking position | Moving distance A in intense irradiation (mm) | Moving distance B in weak irradiation (mm) | Moving-direction length C (mm) | A/B | A/C | B/C | Occurrence of break | Quality of break section |
|---|---|---|---|---|---|---|---|---|---|
| Ex.1 | Ahead | 2.5 | 2.5 | 5 | 1 | 0.5 | 0.5 | ○ | ○ |
| Ex.2 | Ahead | 5 | 5 | 5 | 1 | 1 | 1 | ○ | ⓪ |
| Ex.3 | Ahead | 10 | 5 | 5 | 2 | 2 | 1 | ○ | ○ |
| Ex.4 | Ahead | 15 | 5 | 5 | 3 | 3 | 1 | ○ | ○ |
| Ex.5 | Ahead | 20 | 5 | 5 | 4 | 4 | 1 | ○ | ○ |
| Ex.6 | Ahead | 500 | 0 | 5 | - | 100 | 0 | ○ | Δ |
| Ex.7 | Behind | 500 | 0 | 2 | - | 250 | 0 | ○ | × |

Table 1 reveals that the quality of break sections is excellent when a crack 202 is developed in a position of a scribe line 12 anterior to irradiation region 101 of the laser light 100. It is also revealed that the quality of break sections is improved by changing the irradiation strength of laser light 100 in a wave-like manner with time.

### (Example 8)

In Example 8 (Working Example), the breaking system shown in Figs. 1 and 2 was used to break a glass sheet 10 with a scribe line 12 formed thereon as shown in Fig. 3 in accordance with the breaking process shown in Fig. 5 to Fig. 7 and Fig. 9. The glass sheet 10 was made of green hue soda-lime glass to be used as a window glass for a vehicle, and the glass sheet 10 was formed in a shape having 500 mm in length × 500 mm in width × 3.5 mm in thickness.

The scribe line 12 was formed by rolling the diamond cutter wheel at a moving speed of 100 mm/sec while the leading edge (having a leading edge angle of 155°) of the diamond wheel cutter was pressed against a front surface 11 of the glass sheet 10 by a force of 90N. The scribe line 12 was in parallel with a side of the glass sheet 10, and the glass sheet had widths W1 and W2 set to 10 mm and 490 mm, respectively, on both sides of the scribe line 12.

The CW laser was used as the light source 40 of the laser light 100. Specifically, the semiconductor laser (wavelength of laser light: 808 nm) was used. The irradiation strength of the laser light 100 was cyclically changed by cyclically changing the output of the light source 40 such that the output was set to either one of the values of a maximum output (700 W) and a minimum output (1 W).

The irradiation region 101 of the laser light 100 was formed in a rectangular shape so as to be symmetrical with respect to the scribe line 12, and the irradiation region had a moving-direction length C of 5 mm and a width-direction length D (see Fig. 9) of 5 mm. The laser light 100 moved at a speed of 100 mm/sec.

By continuously moving the irradiation region 101 of the laser light 100 while the irradiation strength of the laser light 100 was changed in a rectangular waveform in this manner, a crack 202 was developed in a position of the scribe line 12 anterior to the irradiation region 101 to carry out a break test.

### (Example 9 to Example 20)

In each of Example 9 to Example 18 (Working Examples) and Example 19 to Example 20 (Comparative Examples), a break test was carried out in the same manner as in Example 8 except that the light source 40 was subjected to different output control, and that a moving distance in intense irradiation A and a moving distance in weak irradiation B were changed.

The conditions and the results of these break tests are shown in Table 2. The results were evaluated in terms of the occurrence of break and the quality of break sections. A symbol of ○ represents a case where the breaking operation was successful, and a symbol of × represents a case where the breaking position was failed. The quality of each break section was evaluated in terms of the inclination S of each break section 15 shown in Fig. 10. A symbol of ⓪ represents a case where the inclination S was at most 0.3 mm, a symbol of ○ represents a case where the inclination S was in a range of higher than 0.3 mm to at most 0.5 mm, a symbol of Δ represents a case where the inclination S was in a range of higher than 0.5 mm to at most 1.0 mm, and a symbol of × represents a case where the inclination S was higher than 1.0 mm.

**[TABLE 2]**

| | Breaking position | Moving distance A in intense irradiation (mm) | Moving distance B in weak irradiation (mm) | Moving-direction length C (mm) | A/B | A/C | B/C | Occurrence of break | Quality of break section |
|---|---|---|---|---|---|---|---|---|---|
| Ex.8 | Ahead | 5 | 5 | 5 | 1 | 1 | 1 | ○ | ⓪ |
| Ex.9 | Ahead | 10 | 10 | 5 | 1 | 2 | 2 | ○ | ⓪ |
| Ex.10 | Ahead | 20 | 20 | 5 | 1 | 4 | 4 | ○ | ○ |
| Ex.11 | Ahead | 5 | 1 | 5 | 5 | 1 | 0.2 | ○ | Δ |
| Ex.12 | Ahead | 5 | 2.5 | 5 | 2 | 1 | 0.5 | ○ | ○ |
| Ex.13 | Ahead | 10 | 5 | 5 | 2 | 2 | 1 | ○ | ⓪ |
| Ex.14 | Ahead | 15 | 5 | 5 | 3 | 3 | 1 | ○ | ○ |
| Ex.15 | Ahead | 20 | 5 | 5 | 4 | 4 | 1 | ○ | ○ |
| Ex.16 | Ahead | 25 | 5 | 5 | 5 | 5 | 1 | ○ | Δ |
| Ex.17 | Ahead | 5 | 10 | 5 | 0.5 | 1 | 2 | ○ | ○ |
| Ex.18 | Ahead | 5 | 20 | 5 | 0.25 | 1 | 4 | ○ | ○ |
| Ex.19 | - | 30 | 30 | 5 | 1 | 6 | 6 | × | - |
| Ex.20 | - | 5 | 25 | 5 | 0.2 | 1 | 5 | × | - |

Table 2 reveals that the quality of break surfaces is improved by setting the ratio A/B to a value in a range of larger than 0.5 to less than 5 (preferably less than 3), setting the ratio A/C to a value in a range of 0.5 to 6 and setting the ratio B/C to a value in a range of larger than 0.2 to less than 6. In each of Example 19 and Example 20, it was impossible to provide the glass sheet 10 with sufficient amount of heat required for breaking since the moving-direction in weak irradiation B was too long.

### INDUSTRIAL APPLICABILITY

In accordance with the present invention, it is possible to break a work piece with good accuracy by a simple structure without disposing a cooling source behind an irradiation region of laser light. The present invention is particularly useful in breaking a glass sheet.

The entire disclosure of Japanese Patent Application No. 2010-145148 filed on June 25, 2010 including specification, claims, drawings and summary is incorporated herein by reference in its entirety.

### REFERENCE SYMBOLS

| | |
|---|---|
| 10: | glass sheet (work piece) |
| 11: | front surface |
| 12: | scribe line |
| 13: | rear surface |
| 14: | edge |
| 15: | break section |
| 20: | breaking system |
| 30: | stage |
| 40: | light source |
| 50: | controller |
| 100: | laser light |
| 101: | irradiation region |
| 102: | focus position |
| 200: | initial crack |
| 201: | leading edge of initial crack |
| 202: | crack |
| 203: | leading edge of crack |

## Claims

1. A process for breaking a work piece made of a brittle-material by irradiating the work piece with laser light, **characterized in that** the process includes:
relatively moving an irradiation region of the laser light along at least a part of a scribe line with respect to the work piece, the scribe line being preliminarily formed on a front surface of the work piece;
developing a crack in a position anterior to the irradiation region; and
changing the irradiation strength of the laser light in a wave-like manner with time.

2. The process according to Claim 2, further comprising:
cyclically changing the irradiation strength of the laser light; wherein
the irradiation region moves at a distance of A (mm) in one cycle while the irradiation strength is kept at at least a limiting value required for developing the crack, the irradiation region moves at a distance B (mm) in the one cycle while the irradiation strength is kept at less than the limiting value, and A/B is in a range of higher than 0.2 to less than 5.

3. The process according to Claim 1 or 2, further comprising:
cyclically changing the irradiation strength of the laser light; wherein
the irradiation region moves at a distance of A (mm) in one cycle while the irradiation strength is kept at at least a limiting value required for developing the crack, the irradiation region has a moving-direction length of C (mm), and A/C is 0.5 to 6.

4. The process according to any one of Claims 1 to 3, further comprising:
cyclically changing the irradiation strength of the laser light; wherein
the irradiation region moves at a distance of B (mm) in one cycle while the irradiation strength is kept at less than a limiting value required for developing the crack, the irradiation region has a moving-direction of C (mm), and B/C is in a range of higher than 0.2 to less than 6.

5. The process according to any one of Claims 1 to 4, wherein the irradiation strength of the laser light is cyclically changed in a pulse waveform, a triangular waveform or a sinusoidal waveform with time.

6. The process according to any one of Claims 1 to 5, wherein the work piece comprises a glass sheet.

7. A system for breaking a work piece made of a brittle-material by irradiating the work piece with laser light, **characterized in that** the system includes:
a stage for supporting the work piece, a light source for emitting the laser light, and a controller for moving an irradiation region of the laser light on a front surface of the work piece;
wherein the controller is configured to move relatively the irradiation region of the laser light along at least a part of a scribe line with respect to the work piece, the scribe line being preliminarily formed on the front surface, such that a crack develops in a position of the scribe line anterior to the irradiation region; and
the controller is configured to change the irradiation strength of the laser light in a wave-like manner with time.

8. The system according to Claim 7, wherein the controller is configured to change cyclically the irradiation strength of the laser light; and wherein
the irradiation region moves at a distance of A (mm) in one cycle while the irradiation strength is kept at at least a limiting value required for developing the crack, the irradiation region moves at a distance B (mm) in the one cycle while the irradiation strength is kept at less than the limiting value, and A/B is in a range of higher than 0.2 to less than 5.

9. The system according to Claim 7 or 8, wherein the controller is configured to change cyclically the irradiation strength of the laser light; and wherein
the irradiation region moves at a distance of A (mm) in one cycle while the irradiation strength is kept at at least a limiting value required for developing the crack, the irradiation region has a moving-direction length of C (mm), and A/C is 0.5 to 6.

10. The system according to any one of Claims 7 to 9, wherein the controller is configured to change cyclically the irradiation strength of the laser light; and wherein
the irradiation region moves at a distance of B (mm) in one cycle while the irradiation strength is kept at less than a limiting value required for developing the crack, the irradiation region moves at a distance of C (mm), and B/C is in a range of higher than 0.2 to less than 6.

11. The system according to any one of Claims 7 to 10, wherein the irradiation strength of the laser light is cyclically changed in a pulse waveform, a triangular waveform or a sinusoidal waveform with time.

12. The system according to any one of Claims 7 to 11, wherein the work piece comprises a glass sheet.
